(19) Europäisches Patentamt
European Patent Office
Office européen des brevets

(11) **EP 3 906 606 B1**

(12) **EUROPÄISCHE PATENTSCHRIFT**

(45) Veröffentlichungstag und Bekanntmachung des Hinweises auf die Patenterteilung:
**08.05.2024   Patentblatt 2024/19**

(21) Anmeldenummer: **19829249.2**

(22) Anmeldetag: **30.12.2019**

(51) Internationale Patentklassifikation (IPC):
**H02K 1/27** *(2022.01)*        **H02K 7/18** *(2006.01)*
**H02K 49/10** *(2006.01)*

(52) Gemeinsame Patentklassifikation (CPC):
**H02K 7/1846; H02K 1/2733; H02K 49/102;**
**H02K 2213/03**

(86) Internationale Anmeldenummer:
**PCT/EP2019/087170**

(87) Internationale Veröffentlichungsnummer:
**WO 2020/141164 (09.07.2020 Gazette 2020/28)**

(54) **TRANSPORTVORRICHTUNG ZUM TRANSPORT WENIGSTENS EINES GEGENSTANDS UND/ODER EINER PERSON**

TRANSPORT DEVICE FOR TRANSPORTATION OF AT LEAST AN ITEM AND/OR A PERSON

DISPOSITIF DE TRANSPORT D'AU MOINS UN ARTICLE ET/OU UNE PERSONNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.12.2018   DE 102018133718**
**31.12.2018   DE 202018006054 U**

(43) Veröffentlichungstag der Anmeldung:
**10.11.2021   Patentblatt 2021/45**

(73) Patentinhaber: **Henk B.V.**
**3045 AX Rotterdam (NL)**

(72) Erfinder:
• **POPOVSKI, Filip**
**6250 Kichevo (MK)**
• **NASEKI, Marko**
**7500 Prilep (MK)**
• **RITZOV, Tashko**
**1000 Skopje (MK)**
• **POERZ, Heiko**
**44575 Castrop-Rauxel (DE)**

(74) Vertreter: **Meinke, Jochen et al**
**Patent- und Rechtsanwälte**
**Meinke, Dabringhaus und Partner**
**Rosa-Luxemburg-Strasse 18**
**44141 Dortmund (DE)**

(56) Entgegenhaltungen:
WO-A1-2010/082893        CN-A- 102 647 060
GB-A- 409 501        US-A1- 2014 183 996

## Beschreibung

Die Erfindung betrifft eine Transportvorrichtung, die zum Transport wenigstens eines Gegenstands und/oder einer Person mittels wenigstens einer Abrolleinrichtung über einen Boden bewegbar ist.

Es ist ein Antriebselement vorgesehen, das zumindest mittelbar durch die Abrolleinrichtung in Rotation versetzbar ist.

Aus der DE 20 2016 000 172 U1 ist ein Transportmittel bekannt, das einen integrierten elektrischen Energiegenerator umfasst.

Der Energiegenerator ist mit den auf beiden Seiten des Transportmittels befindlichen Rädern verbunden, um elektrische Energie zu erzeugen.

Der bekannte Stand der Technik erweist sich jedoch als nachteilig, da der Energiegenerator in einer Weise in der Transportvorrichtung angeordnet ist, dass er einer Beschädigung durch den transportierten Gegenstand oder durch die transportierte Person ausgesetzt ist.

Die Anordnung des Energiegenerators verringert zudem das Aufnahmevolumen der Transportvorrichtung für Gegenstände. Insbesondere die Standfläche, die zum Transport einer Person zur Verfügung steht, wird durch die Positionierung des Energiegenerators verringert.

## Aufgabe der Erfindung

Es ist daher die Aufgabe der Erfindung, eine Transportvorrichtung zum Transport wenigstens eines Gegenstands und/oder einer Person bereitzustellen, die die oben genannten Nachteile umgeht.

Eine weitere Aufgabe der Erfindung besteht darin, eine Transportvorrichtung bereitzustellen, die technisch weniger aufwendig ist und daher günstiger herstellbar ist.

Die Anzahl der zur Erzeugung von elektrischem Strom erforderlichen Komponenten soll reduziert werden können, und in einer raumsparenden Anordnung zusammengefasst sein.

## Lösung der Aufgabe

Die Aufgaben werden gelöst, durch eine Transportvorrichtung, die zum Transport wenigstens eines Gegenstands und/oder einer Person mittels wenigstens einer Abrolleinrichtung über einen Boden bewegbar ist.

Es ist ein Antriebselement vorgesehen, das zumindest mittelbar durch die Abrolleinrichtung in Rotation versetzbar ist.

Das Antriebselement umfasst wenigstens zwei Antriebsmagnete.

Es ist darüber hinaus ein Abtriebselement vorgesehen, das wenigstens zwei Abtriebsmagnete aufweist.

Die Anzahl der Antriebsmagnete weicht von der Anzahl der Abtriebsmagnete ab.

Zur Änderung der Ausrichtung eines zwischen dem Antriebselement und dem Abtriebselement angeordneten Magnetfeldes ist wenigstens ein nicht magnetisches Abschirmungselement vorgesehen.

Das Abtriebselement ist in eine Rotation versetzbar.

Es ist wenigstens eine Statorwicklung angeordnet, in der das Abtriebselement zur Erzeugung von elektrischem Strom um eine Rotationsachse rotierbar ist.

Die Aufgabe wird darüber hinaus durch ein Verfahren zur Erzeugung eines elektrischen Stroms mittels der Transportvorrichtung gelöst.

## Transportvorrichtung

Die Erfindung versteht unter einem Transportmittel ein Betriebsmittel zum Transport von Gegenständen und/oder einer Person.

Die Erfindung umfasst Transportvorrichtungen, die von einer Person geschoben oder gezogen werden. Es sind darüber hinaus Transportvorrichtungen vorgesehen, die durch Muskelkraft, vorzugsweise eines Menschen, angetrieben werden.

Vorzugsweise und in keiner Weise ausschließlich handelt es sich bei der Transportvorrichtung um einen Kinderwagen, einen Sportkinderwagen, einen Kombi-Kinderwagen, einen Buggy, oder einen Krippenwagen.

Die Erfindung umfasst ebenso einen Rehabuggy, sowie einen Rehawagen und/oder einen Rollstuhl.

Der Begriff Transportvorrichtung umfasst ebenso Kinderwagen mit Tretfunktion.

In dem Begriff Transportvorrichtung sind ebenfalls Einkaufswagen, Bollerwagen, und/oder Schubkarren umfasst.

Die Erfindung umfasst darüber hinaus weitere ein- oder mehrachsige Transportvorrichtungen, die vorzugsweise von einer Person angetrieben werden, indem die Person sich während der Fortbewegung konstant mit beiden Füßen auf der Transportvorrichtung befindet.

Die Transportvorrichtung kann dabei ein Einrad oder ein Zweirad oder ein Fahrrad mit wenigstens drei Achsen sein.

Die Erfindung umfasst auch solche Transportvorrichtungen, die von einer Person in Bewegung gesetzt werden, indem die Person zumindest zeitweise die Transportvorrichtung mit einem Fuß gegenüber dem Boden abstößt.

Die Erfindung umfasst als Transportvorrichtungen insbesondere Hoverboards, Roller, Einkaufswagen, Skateboards und/oder Segways.

Es versteht sich von selbst, dass die vorausgehende Aufzählung nur beispielhaft und in keiner Weise voll umfassend gemeint ist.

Im Folgenden wird davon ausgegangen, dass die Transportvorrichtung ein Rollkoffer ist. Der Rollkoffer wird mittels wenigstens einer Abrolleinrichtung über einem Boden bewegt.

### Abrolleinrichtung

Die Abrolleinrichtung bezeichnet einen Gegenstand, der vorzugsweise ein Rad der Transportvorrichtung vollumfänglich umgibt. Das Rad rollt auf dem Boden über die Abrolleinrichtung ab.

Die Abrolleinrichtung ist vorzugsweise ringförmig ausgebildet. In den Innenumfang der Abrolleinrichtung sind vorzugsweise die Felge eines Rads und/oder ein Radkranz einsetzbar.

Die Abrolleinrichtung ist zumindest bereichsweise aus Gummi oder aus einem Kunststoff gefertigt.

Der Gummi der Abrolleinrichtung hat eine spezifische Form. Der Gummi ist mit dem Antriebselement verbindbar. Die Abrolleinrichtung kann mit dem Antriebselement zusammen vergossen werden.

Die Abrolleinrichtung kann auch aus jedem anderen Werkstoff, wie z.B. Holz oder Metall, gefertigt sein.

Die Abrolleinrichtung kann wenigstens ein drehbar gelagertes Rad umschließen.

### Antriebselement

Erfindungsgemäß bezeichnet das Antriebselement einen ringförmigen Kranz.

Der ringförmige Kranz umfasst dabei wenigstens zwei Magnete.

Das Antriebselement ist zumindest mittelbar mit der Abrolleinrichtung verbunden.

Das Antriebselement kann mit der Abrolleinrichtung kraftschlüssig und/oder stoffschlüssig und/oder formschlüssig verbunden sein. Es ist denkbar, dass das Antriebselement mit der Abrolleinrichtung verklebt ist.

Das Antriebselement ist drehbar angeordnet. Die Rotationsgeschwindigkeit des Antriebselements stimmt mit der Rotationsgeschwindigkeit der Abrolleinrichtung überein.

Das Antriebselement kann in derselben Richtung oder entgegengesetzt zur Abrolleinrichtung rotieren.

Das Antriebselement weist vorzugsweise zwei, insbesondere aber eine Vielzahl von unterschiedlich gepolten Magneten auf.

Die unterschiedlich gepolten Magnete sind zur Ausbildung des Antriebselements kreisförmig miteinander verbunden.

Die im Antriebselement angeordneten Magnete werden als Antriebsmagnete bezeichnet.

### Abtriebselement

Die Erfindung versteht unter dem Begriff Abtriebselement ein ringförmiges Gebilde. Das Abtriebselement umfasst wenigstens zwei gegeneinander gepolte Magnete.

Die Anzahl der im Abtriebselement angeordneten Magnete ist geringer, als die Anzahl der im Antriebselement positionierten Magnete.

Die im Abtriebselement nebeneinander angeordneten Magnete werden als Abtriebsmagnete bezeichnet.

Das Abtriebselement ist ringförmig ausgebildet. Das Abtriebselement ist insbesondere gegenüber dem Antriebselement frei um eine Rotationsachse drehbar.

Die Abtriebselemente umfassen qualitativ hochwertige Neodymiummagnete. Diese Magnete sind die weltweit stärksten Magnete. Die Abtriebselemente haben eine einfache Form. Sie sind kommerziell erhältlich und können nach geringfügiger Modifikation verbaut werden.

Die Abtriebselemente können aus demselben Material gefertigt werden, wie die Antriebselemente. Die Abtriebselemente haben eine spezifischere Form. Die Abtriebselemente erfordern daher eine noch präzisere Fertigungsgenauigkeit.

### Abschirmungselement

Vorzugsweise, aber nicht ausschließlich,umfasst das Abschirmungselement einen nicht magnetischen Ring.

Im Folgenden wird rein exemplarisch von einem ringförmigen, nicht magnetischen Körper, in Form eines Käfigs ausgegangen. Der nicht magnetische Körper ist zumindest bereichsweise aus Metall aufgebaut.

Das Abschirmungselement umfasst eine Vielzahl von Metallsegmenten.

Die Metallsegmente können zumindest bereichsweise aus Stahl gefertigt sein.

Das Abschirmungselement ist vorzugsweise, aber nicht ausschließlich zwischen dem Antriebselement und dem Abtriebselement angeordnet.

Das Antriebselement und/oder das Abschirmungselement und/oder das Abtriebselement können jeweils ringförmig ausgebildet sein.

Das Abschirmungselement kann im Inneren des ringförmig ausgebildeten Antriebselements angeordnet sein.

Das ringförmig ausgestaltete Abtriebselement kann im Inneren des ringförmig ausgebildeten Abschirmungselements positioniert sein.

Das Abschirmungselement wird aus qualitativ hochwertigem Titan (Grad 1) hergestellt. Das Abschirmungselement wird unter Einsatz herkömmlicher Material-Abtragungstechniken gefertigt.

### Metallsegmente

Die Metallsegmente werden aus ferritischem Edelstahl hergestellt. Sie haben eine vergleichsweise einfache Form und kleine Abmessungen. Die Metallsegmente erfordern eine hohe Fertigungsgenauigkeit.

### Stator mit Statorwicklungen

Das Abtriebselement ist im Bereich eines Stators angeordnet. Der Stator umfasst wenigstens zwei elektrische Wicklungen.

Die elektrischen Wicklungen sind miteinander zu einer Ringform verbunden. Die elektrischen Wicklungen bilden einen ringförmigen Stator.

Das Abtriebselement ist zwischen den elektrischen Wicklungen in einem Bereich angeordnet, der von den elektrischen Wicklungen des Stators umgeben ist.

Das Abtriebselement kann als Stator ausgebildet sein.

Der Stator mit den Statorwicklungen kann vorzugsweise aber nicht ausschließlich 120 metallene Spulen umfassen.

Die Spulen sind vorzugsweise umeinander verwickelt.

Beispielhaft, aber in keiner Weise ausschließlich, können 20 Spulen so miteinander verwickelt sein, dass sie in einer Breite mit der Breite der Abrolleinrichtung übereinstimmen.

Es können vorzugsweise, aber nicht ausschließlich, sechs Spulen umfassende Schichten einander überlappen.

Die Transportvorrichtung erweist sich als äußerst vorteilhaft, da die Effizienz zur Erzeugung von elektrischem Strom über 90% liegen kann.

Die Transportvorrichtung zur Erzeugung von elektrischem Strom erweist sich als äußerst zuverlässig.

Zwischen dem Antriebselement und/oder dem Abtriebselement und/oder dem Abschirmungselement und/oder der Statorwicklung liegt keine mechanische Reibung an.

Der Wegfall jeglicher mechanischen Reibung beruht auf dem Einsatz von Permanentmagneten und den Metallsegmenten des Abschirmungselements.

Die Transportvorrichtung zur Erzeugung von elektrischem Strom ist insbesondere aufgrund des Fehlens von mechanischer Reibung zwischen den Komponenten äußerst wartungsfreundlich.

Zur Herstellung des Stators wird eine hochkorrosionsbeständige Legierung verwendet. Die Legierung ist nach herkömmlichen Fertigungsverfahren leicht herstellbar. Die Legierung kann auf einer 13-Achsen CNC Maschine hergestellt werden. Die Legierung kann poliert und lackiert werden.

Für die Herstellung von Statorwicklungen werden handelsübliche Kupferdrähte eingesetzt. Es bedarf keiner weiteren Bearbeitung der Drähte vor dem Zusammenbau.

### Transportvorrichtung zur Erzeugung von elektrischem Strom

Durch die Bewegung der Transportvorrichtung durch menschliche Muskelkraft rollt die wenigstens eine Abrolleinrichtung über einen Boden ab.

Zumindest mittelbar ist das Antriebselement durch die Abrolleinrichtung in eine Rotation versetzbar.

Vereinfachend, aber in keiner Weise ausschließlich, wird davon ausgegangen, dass die Rotationsgeschwindigkeit der Abrolleinrichtung mit der Rotationsgeschwindigkeit des Antriebselements übereinstimmt.

Es wird weiter davon ausgegangen, dass das Antriebselement ringförmig ausgebildet ist.

Das Antriebselement umfasst eine Vielzahl von Magneten, die jeweils nebeneinander angeordnet sind. Die Antriebsmagnete bilden das ringförmige Antriebselement.

Durch die Rotation des Antriebselements mit der Vielzahl von Antriebsmagneten entsteht ein Magnetfeld.

Das Magnetfeld umfasst eine Vielzahl von abwechselnd nebeneinander angeordneten Nord- und Südpolen.

Mit der Rotation des Antriebselements um eine Rotationsachse drehen sich auch die abwechselnd als Nord- und Südpole angeordneten Magnete um die Rotationsachse.

Im Bereich des Antriebselements ist das Abtriebselement angeordnet.

Das Antriebselement umfasst wenigstens zwei Magnete, die jeweils einen Nordpol und einen Südpol bilden.

Die Anzahl der Magnete des Abtriebelements ist geringer, als die Anzahl der Magnete des Antriebselements.

Zwischen dem Antriebselement und dem Abtriebselement ist ein Magnetfeld angeordnet.

Das Abschirmungselement ist vorzugsweise zwischen dem Antriebselement und dem Abtriebselement positioniert.

Das Abschirmungselement ändert das Magnetfeld, das zwischen dem Antriebselement und dem Abtriebselement bildbar ist.

Mit der Rotation des Antriebselements und der zugehörigen Magnete ist das Abtriebselement in eine Rotation um die Rotationsachse versetzbar.

Das Abtriebselement weist dabei jeweils zwei Magnete mit je zwei Nordpolen und zwei Südpolen auf.

Das Abtriebselement rotiert mit einer Rotationsgeschwindigkeit um die Rotationsachse, die die Rotationsgeschwindigkeit des Antriebselements übersteigt.

Die Metallsegmente des Abschirmungselements verändern das Magnetfeld, welches zwischen dem Antriebselement und dem Abtriebselement angeordnet ist.

Die Änderung des Magnetfelds zwischen dem Antriebselement und dem Abtriebselement bewirkt eine Multiplikation der Anzahl der Rotationen des Abtriebselements um die Drehachse mit der Anzahl der Rotationen des Antriebselements um die Drehachse.

Die Änderung des Magnetfelds zwischen dem Antriebselement und dem Abtriebselement durch das Abschirmungselement mit seinen Metallsegmenten bewirkt eine Erhöhung der Rotationsgeschwindigkeit des Abtriebselements um die Drehachse.

Die Metallsegmente des Abschirmungselements werden in dem Abschirmungselement gehalten.

Erfindungsgemäß das Abschirmungselement eine mechanische Ringstruktur ist. Die Metallsegmente sind in Richtung der Rotationsachse über die Ringform des Abschirmungselements verteilt.

Das Abtriebselement rotiert im Bereich der Statorwicklungen um seine Rotationsachse.

Mit der Drehung der Abtriebsmagnete des Abtriebselements innerhalb der wenigstens zwei Statorwicklungen entsteht in den Statorwicklungen eine elektrische Spannung.

Die Erzeugung von elektrischer Spannung entspricht der Erzeugung elektrischer Energie.

Die mittels der Transportvorrichtung erzeugbare elektrische Energie ist zu einem Speicher elektrischer Energie, vorzugsweise zu einer Batterie, abführbar.

## Ausführungsformen der Erfindung

In einer Ausführungsform der Erfindung sind das Antriebselement und/oder das Abtriebselement und/oder das Abschirmungelement und/oder die Statorwicklungen in der Abrolleinrichtung angeordnet. Auf diese Weise sind sämtliche Komponenten, die in der Transportvorrichtung zur Erzeugung von elektrischem Strom angeordnet sind, in der Abrolleinrichtung angeordnet.

Die Komponenten der Transportvorrichtung, die der Erzeugung von elektrischer Energie dienen, sind dadurch vor weiterer Beschädigung geschützt.

Ein Aufnahmeraum der Transportvorrichtung zur Aufnahme von Gegenständen wird nicht durch die Komponenten zur Stromerzeugung beansprucht.

Vorzugsweise wird die Standfläche der Person in und/oder auf der Transportvorrichtung nicht verkleinert.

Eine weitere Ausgangsform der Erfindung sieht vor, dass das Antriebselement die Abrolleinrichtung ist.

Die Komponenten zur Stromerzeugung der Transportvorrichtung umfassen wenigstens ein Antriebselement und/oder wenigstens eine Abrolleinrichtung und/oder wenigstens ein Abtriebselement und/oder wenigstens ein Abschirmungselement und/oder wenigstens eine Statorwicklung.

Die Komponenten der Transportvorrichtung zur Stromerzeugung sind räumlich in der Abrolleinrichtung umfasst.

Die Abrolleinrichtung kann dabei mit dem Antriebselement übereinstimmen.

Das Antriebselement ist direkt oder zumindest mittelbar durch die Abrolleinrichtung in Rotation um die Rotationsachse versetzbar.

Nach einer weiteren Ausführungsform der Erfindung umschließt die Abrolleinrichtung der Transportvorrichtung ein Rad.

Das Rad ist in seiner Größe und/oder seiner Breite und/oder seinem Umfang an die Größe und/oder den räumlichen Umfang der Transportvorrichtung angepasst.

Das Rad kann einen Durchbruch aufweisen zur Aufnahme einer Nabe.

Das Rad kann gleichfalls als Scheibe ausgebildet sein oder Speichen aufweisen.

Das Rad ist zumindest bereichsweise aus Metall gefertigt. Radial am Außenumfang des Rades ist die Abrolleinrichtung vorgesehen. Über die Abrolleinrichtung rollt das Rad auf dem Boden ab.

Eine weitere Ausführungsform der Erfindung sieht vor, dass der wenigstens eine Antriebsmagnet und/oder der wenigstens eine Abtriebsmagnet als Permanentmagnete ausgebildet sind.

Zusätzlich ist vorgesehen, dass die Anzahl der Antriebsmagnete die Anzahl der Abtriebsmagnete übersteigt.

Die größere Anzahl von Magneten des Antriebselements und die geringere Anzahl von Magneten in dem Abtriebselement wirken als magnetisches Getriebe.

Das magnetische Getriebe weist eine große Differenz der Rotationsgeschwindigkeit des Antriebselements gegenüber der Rotationsgeschwindigkeit des Abtriebselements auf.

Die Rotationsgeschwindigkeit des Antriebselements wird von der Abrolleinrichtung auf das Antriebselement übertragen.

Hingegen wird die Rotationsgeschwindigkeit des Abtriebselements über die Wicklungen des Stators in elektrische Energie umgewandelt.

Hierdurch entsteht eine hohe Effektivität bei der Erzeugung von elektrischem Strom durch die Transportvorrichtung. Die hohe Effektivität wird nicht durch mechanische Reibung geschmälert. Eine Schmierung von mechanisch, sich gegeneinander bewegenden Komponenten, ist nicht erforderlich.

In einer anderen Ausführungsform der Erfindung ist vorgesehen, dass das Antriebselement ringförmig ausgebildet ist. In dem ringförmigen Antriebselement ist eine Vielzahl von nebeneinander angeordneten Antriebsmagneten vorgesehen.

Durch ihre ringförmige Ausbildung kann das Antriebselement in einem Rad angeordnet sein. Das Antriebselement kann auch in einer anderweitig ausgebildeten Abrolleinrichtung positioniert sein.

Die nebeneinander angeordneten Nord- und Südpole der Vielzahl von Antriebsmagneten bewirkt eine besonders ausgeprägte Erhöhung der Rotationsgeschwindigkeit des Abtriebselements um die Drehachse des Abtriebselements.

Die Übertragung der Erhöhung der Rotationszahl von dem Antriebselement auf das Abtriebselement ist somit unbeeinträchtigt von jeglichen Reibungsverlusten durchführbar.

Eine andere Ausführungsform der Erfindung sieht vor, dass das Antriebselement und/oder das Abtiebselement und/oder das Abschirmungselement und/oder die Statorwicklung berührungslos nebeneinander angeordnet sind.

Eine Erzeugung von elektrischer Energie in der Transportvorrichtung ist auf diese Weise ohne weitere mechanische Verluste vorzugsweise in Form von Reibung möglich.

Zusätzlicher Wartungs- und Instandhaltungsaufwand durch Schmierung von mechanisch gegeneinander wirkenden Komponenten ist nicht erforderlich.

Die vorliegende Erfindung zur Erzeugung von elektrischer Energie kann in jede wie auch immer geartete Transportvorrichtung eingesetzt werden. Je nach Größe, Schwere und Umfang der Transportvorrichtung kann die Größe der zur Erzeugung elektrischer Energie vorgesehenen Komponenten erhöht oder verringert werden.

Die Anpassung der Größe und/oder die Anpassung der Erhöhung der Rotationsgeschwindigkeit des Abtriebselements erfolgt durch die Erhöhung oder die Verringerung der Anzahl der Antriebsmagnete im Antiebselement.

Zusätzlich ist eine Erhöhung oder eine Verringerung der Anzahl der Metallsegmente im Abschirmungselement möglich.

Darüber hinaus ist vorgesehen, dass die Abrolleinrichtung mit dem Antriebselement verbindbar ist.

Die zur Erzeugung von elektrischem Strom vorgesehenen Komponenten der Transportvorrichtung sind gegeneinander frei bewegbar.

Die freie Bewegbarkeit der Komponenten gegeneinander ist jeweils durch einen Luftspalt gewährleistet.

Zur Übertragung der durch die Bewegung der Abrolleinrichtung über dem Boden in die Abrolleinrichtung eingebrachte kinetische Energie in das Antriebselement ist das Antriebselement zumindest mittelbar mit der Abrolleinrichtung verbunden.

Die Verbindung der Abrolleinrichtung mit dem Antriebselement kann kraftschlüssig und/oder stoffschlüssig und/oder formschlüssig erfolgen.

Das Antriebselement kann in eine aus Gummi gefertigte Abrolleinrichtung eingegossen sein.

Das Antriebselement ist fest mit der Abrolleinrichtung verbindbar.

Eine andere Ausführungsform der Erfindung sieht vor, dass der in der Transportvorrichtung erzeugte elektrische Strom von der Statorwicklung zu einem Speicher für elektrische Energie überführbar ist.

Der Speicher für elektrische Energie ist vorzugsweise eine Batterie.

Zur Abführung der elektrischen Energie ist an der Abrolleinrichtung vorzugsweise ein Stromleiter angeordnet.

Der Stromleiter ist ein Kabel für Gleichstrom oder Wechselstrom.

Das Kabel ist über einen Kabelausgang mit einem nicht um eine Rotationsachse drehbaren Bereich der Abrolleinrichtung, vorzugsweise die Nabe, verbunden.

Die Anbindung der Stromleiter von den Statorwicklungen zu dem Stromspeicher kann auf jede Abrolleinrichtung übertragen werden.

Rein beispielhaft, und in keiner Weise ausschließlich, kann der elektrische Strom von dem Stator über wenigstens einen Schleifringkontakt zu dem Stromspeicher übertragen werden.

Das Erfordernis für zusätzliche mechanische Lagerungen entfällt.

Die Batterie ist derart in/an der Transportvorrichtung angeordnet, dass ein leichter Zugang zur Batterie gewährleistet bleibt.

Die Batterie kann als Batterie-Zelle ausgebildet sein. Die Person kann die Batterie-Zelle von der Transportvorrichtung ablösen und sie als tragbare Stromquelle verwenden.

Die mit Hilfe der Transportvorrichtung erzeugte elektrische Energie kann in einer Batterie zwischengespeichert werden. Die in der Transportvorrichtung erzeugte elektrische Energie dient insbesondere zum Aufladen eines Handys und/oder eines Laptops und/oder jedes anderen elektronischen Geräts.

**Beispiel**

**Berechnungen und Erklärung des Systems**

Vorzugsweise werden als Permanentmagnete Neodymium Magnete verwendet.

Die Permanentmagnete haben vorzugsweise eine Stärke von 14000 Gauß. Dies entspricht der magnetischen Induktion.

$B = 1,4\ T$ - magnetische Induktion

$e_p = B*l*V$ - in den Leiter induzierte Spannung

$e_m = 2*e_p$ - in eine der Spulen induzierte Spannung

$e_{nom} = w*e_m$ - gesamte induzierte Spannung

$w = 120$ - gesamte Anzahl von Spulen

$l = 15\,[mm]$ - aktive Spulenlänge

$V$ - lineare Geschwindigkeit der Spule (bzw. der Abrolleinrichtung)

$V = w*R$ - Rotationsfrequenz der Abrolleinrichtung * Außenradius der Abrolleinrichtung

$R = 40\,[mm]$ - Außenradius

$n = 250\,[min^{-1}]$ - Umdrehungen der Abrolleinrichtung pro Minute $V = [\frac{1m}{s}]$ -lineare (Bewegung) Geschwindigkeit des Rollkoffers

$$e_p = B*l*V = 1,4*0,015*1 = 0,022\,[V]$$

$$e_m = 2*e_p = 0,022 = 0,044\,[V]$$

$$e_{nom} = w*e_m = 5,28\,[V]$$

Diese Ladung bezieht sich auf in Serie miteinander geschaltete Spulen. Die Ladung entspricht einer Wechselspannung und muss in Gleichspannung umgewandelt werden. Die Umwandlung erfolgt durch Verwendung einer einfachen Diode. Die Ladung wird in Gleichstrom umgewandelt. Die Umwandlung der Ladung in Gleichstrom ist für die Aufladung z.B. eines Handys erforderlich.

Jede weitere Zusatzelektronik wird in die Batterie integriert.

Als Batterie wird eine Li-pol-Lithium-Polymer-Batterie verwendet.

Dieser Batterietyp kann in jede erforderliche Form gegossen werden.

Die Größe der Batterie sollte ein Maß von 80 x 50 x 10 mm inklusive aller Elektronik nicht übersteigen.

Aufgrund der reibungslosen Bauart der Abrolleinrichtung (vorzugsweise in einem Rad) ist die erzeugte elektrische Energie proportional zu dem Gewicht der Transportvorrichtung (vorzugsweise des Rollkoffers).

Dies bedeutet, dass ein schwererer Koffer effektiver bei der Erzeugung elektrischer Energie ist.

Wenn der Rollkoffer einmal in Bewegung ist, ist es nicht schwer, den Rollkoffer während der Erzeugung von elektrischer Energie in Bewegung zu halten.

$P = (\varphi * F_{\mu} * d*)/318310 = (0,5*22,5*80*1000)/318310 = 22,92[W]$ - potenzielle Stärke des Generators

$\varphi = 0,5$ - Effizienzkoeffizient

$F_{\mu} = p*F = 0,9*25 = 22,05[N]$ - Reibungskraft bei jedem einzelnen Rad

$\mu = 0,9$ - Reibungskoeffizient

$F = 0,25*G*g = 25[N]$ - Kraft des Rollkoffers gegenüber der Abrolleinrichtung (vorzugsweise: individuelles Rad)

$d$ [mm]- Außenumfang der Abrolleinrichtung (Rad)

Der Wert 1000 wird in der vorausgehenden Formel zur Umwandlung der Einheiten von KW zu W verwendet.

$P = I*U$ - elektrische Energie des Generators

$U = 5[V]$ - direkte Spannung zum Laden der Batterie

$1 = P/U = 4,5[A]$ - zur Batterie fließender Strom

Entsprechend der theoretischen Berechnung der mit Hilfe der Räder erzeugten elektrischen Energie wird der erfindungsgemäße Mechanismus vorzugsweise jeweils in zwei Räder eingebaut. Hierdurch wird eine ausreichende Menge elektrischer Energie für eine Schnellaufladung bzw. für eine Kurzzeitaufladung erzeugt.

Das erfindungsgemäße System kann auch in weitere Räder übernommen werden. Sofern vier Räder zum Einsatz kommen, kann das erfindungsgemäße System zum Laden eines Laptops herangezogen werden.

**Teile der Abrolleinrichtung** - **Gewicht und Material**

| Teilbezeichnung | Menge | Material | Gewicht (in Gramm) |
|---|---|---|---|
| Stator der Abrolleinrichtung (Rad) | 1 | 5052 AluminiumLegierung | 50 |
| Statorwicklungen | 1 | Kupferdraht (0,5mm im Durchmesser) | 15 |
| Abschirmungselement | 1 | Titan (Grad 1) | 38 |
| Metallsegment | 20 | Edelstahl (ferritisch) | 20 (Gesamt) |
| Antriebselement | 30 (15 jeder Polarität) | Neodymium Magnet | 70 (Gesamt) |
| Gummi | 1 | Gummi | 20 |

(fortgesetzt)

| Teilbezeichnung | Menge | Material | Gewicht (in Gramm) |
|---|---|---|---|
| Abtriebselement | 4 (2 von jeder Polarität) | Neodymium Magnet | 10 (Gesamt) |
| Gesamt 223+/-5% | | | |

**Materialeigenschaften**

1. Die Aluminiumlegierung 5052 ist eine Aluminiumlegierung, die als Bestandteile vorzugsweise Magnesium und Chrom umfasst. Die Aluminiumlegierung 5052 hat außergewöhnliche, antikorrosive Eigenschaften und gute Umformeigenschaften. Die Legierung lässt sich außerdem gut verarbeiten.

2. Kupferdraht mit einem Durchmesser von 0,5 mm ist weit verbreitet und bedarf keiner weiteren Erklärung.

3. Titan (Grad 1) weist eine hervorragende Formbarkeit auf. Es weist eine hervorragende Korrosionsbeständigkeit und eine hohe Kerbschlagzähigkeit auf.

4. Ferritischer Edelstahl der Gruppe 5 (446, 445 und 447): Diese Gruppe von Spezial-Edelstahl weist einen relativ hohen Chromanteil auf. Der Chromanteil resultiert in einer hervorragenden Korrosionsfestigkeit. Anstatt eines austenitischen Edelstahls wird magnetischer Edelstahl verwendet, da wie vorausgehend beschrieben das Magnetfeld verändert wird.

5. Neotiniummagnete sind die stärksten Magnete, die auf dem Markt verfügbar sind. Neotiniummagnete sind erforderlich, um die Effizienz und die Leistungsfähigkeit zur Erzeugung von elektrischem Strom in der Transportvorrichtung zu optimieren.

6. Für die Herstellung der Abrolleinrichtung wird herkömmlicher Gummi verwendet.

**Weitere Komponenten**

| Teilbezeichnung | Bemerkung | Gewicht in kg | | |
|---|---|---|---|---|
| Batterie | Lithium polymer | 0,2 | | |
| Sicherheitselektronik | 1. Gleichstrom vs Wechselstromwandler 2.Batteriekontrollsystem 3. USB-Anschluss | 0,05 | | |
| Schleifring | Figur | 0,1 | | |

Weitere Beispiele und Ausführungsformen der Erfindung werden anhand der Zeichnung näher beschrieben.
Hierbei zeigen:

Fig. 1 die Komponenten der Transportvorrichtung zur Erzeugung von elektrischem Strom,

Fig. 2 eine Abrolleinrichtung mit Kontakten zur Abführung von elektrischem Strom zur einer Batterie,

Fig. 3 einen Schleifringkontakt zur Weiterleitung des elektrischen Stroms zur Batterie und

Fig. 4 die Abrolleinrichtung mit einer Gabel zur Führung der Abrolleinrichtung.

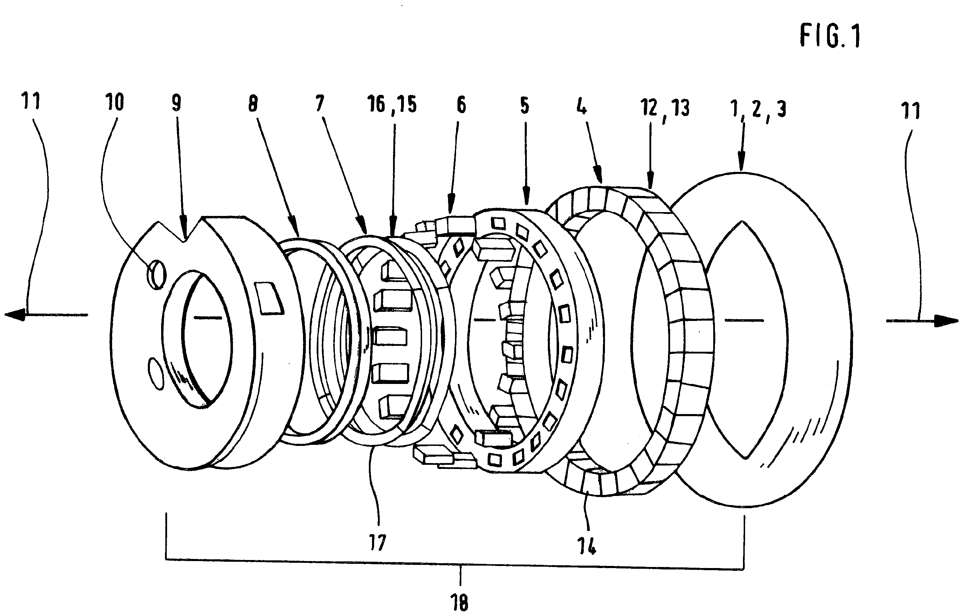

Die Fig. 1 zeigt von rechts nach links einen Gummimantel 1 eines Rads 2 für die Transportvorrichtung 23 (nicht gezeigt).

Die Abrolleinrichtung 3 umfasst als Komponenten 18 den Gummimantel 1, ein Antriebselement 4 und ein Abschirmungselement 5.

Das Abschirmungselement 5 umfasst wenigstens zwei Metallsegmente 6.

Die Abrolleinrichtung 3 umfasst als weitere Komponenten wenigstens ein Abtriebselement 7 und Statorwicklungen 8.

In der Fig. 1 ist weiterhin eine Felge 9 der Abrolleinrichtung 3 dargestellt.

Mit der Bezugsziffer 10 sind elektrische Kontakte dargestellt, die der Abführung der erzeugten elektrischen Energie dienen.

Die Bezugsziffer 11 bezeichnet eine Rotationsachse für die Rotation des Antriebselements 4 und des Abtriebselements 7.

Das Antriebselement 4 umfasst Antriebsmagnete 12, wobei jeder Antriebsmagnet 12 jeweils einen Nordpol 13 und einen Südpol 14 umfasst.

Das Abtriebselement 7 umfasst Abtriebsmagnete 15, die jeweils einen Nordpol 16 und einen Südpol 17 aufweisen.

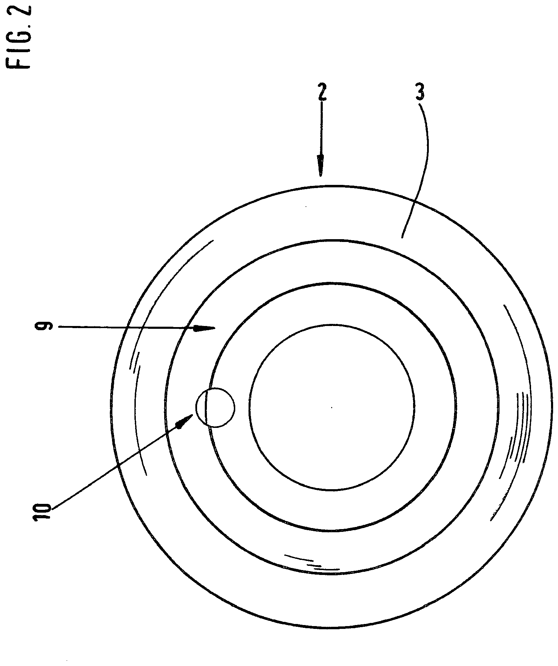

Die Fig. 2 zeigt das Rad 2 mit der Abrolleinrichtung 3. Radial innerhalb der Abrolleinrichtung 3 ist die Felge 9 dargestellt.

Die Kontakte 10 dienen der Abführung der mittels der Komponenten 18 erzeugten elektrischen Energie.

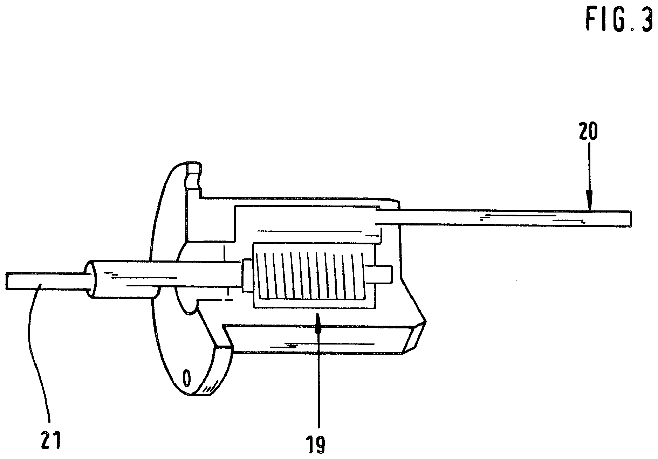

Die Fig. 3 zeigt einen Schleifringkontakt 19, der die mittels der Komponenten 18 der Abrolleinrichtung 3 erzeugte elektrische Energie von den Kontakten 10 der Abrolleinrichtung 3 zu einer Batterie (nicht gezeigt) transportiert.

Mit den Bezugsziffern 20 und 21 sind elektrische Leitungen dargestellt, die den elektrischen Strom von der Abrolleinrichtung kommend (20) zur Batterie hin überführen (21).

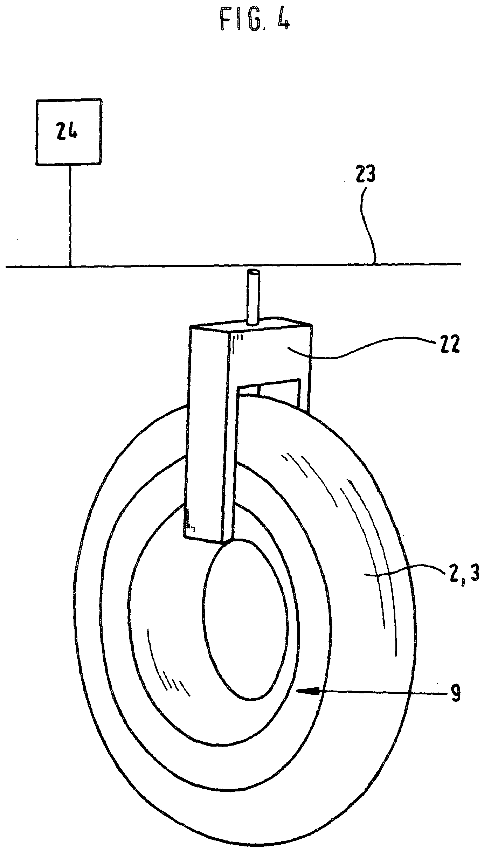

Fig. 4 zeigt Abrolleinrichtung 3 nach der Fig. 2.

Mit der Bezugsziffer 22 ist eine Gabel dargestellt, mit der die Abrolleinrichtung 3 bzw. das Rad 2 an der Transportvorrichtung 23 befestigt ist.

Mit der Bezugsziffer 24 ist ein Verbraucher von elektrischem Strom (z.B. ein Handy) dargestellt, der mit dem durch die Komponenten 18, im Bereich der Abrolleinrichtung 3, erzeugten elektrischen Strom aufladbar ist.

**Bezugszeichenliste**

1   Gummimantel
2   Rad
3   Abrolleinrichtung
4   Antriebselement
5   Abschirmungselement
6   Metallsegment
7   Abtriebselement
8   Statorwicklung
9   Felge
10   Kontakte
11   Rotationsachse
12   Antriebsmagnet
13   Nordpol
14   Südpol
15   Abtriebsmagnet
16   Nordpol
17   Südpol
18   Komponenten
19   Schleifringkontakt
20   elektrische Leitung
21   elektrische Leitung
22   Gabel
23   Transportvorrichtung
24   Handy

**Patentansprüche**

1. Transportvorrichtung (23), die zum Transport wenigstens eines Gegenstands und/oder einer Person mittels wenigstens einer Abrolleinrichtung (3) über einen Boden bewegbar ist, und

   - mit einem Antriebselement (4), das zumindest mittelbar durch die Abrolleinrichtung (3) in Rotation versetzbar ist, wobei
   - das Antriebselement (4) wenigstens zwei Antriebsmagnete (12) umfasst und
   - ein Abtriebselement (7) vorgesehen ist, das wenigstens zwei Abtriebsmagnete (15) aufweist,
   - wobei die Anzahl der Antriebsmagnete (12) von der Anzahl der Abtriebsmagnete (15) abweicht, und
   - zur Änderung der Ausrichtung eines zwischen dem Antriebselement (4) und dem Abtriebselement (7) angeordneten Magnetfeldes wenigstens ein nichtmagnetisches Abschirmungselement (5) vorgesehen ist, und
   - wobei das Abtriebselement (7) in eine Rotation versetzbar ist und
   - wenigstens eine Statorwicklung (8) angeordnet ist, in der das Abtriebselement (7) zur Erzeugung von elektrischem Strom um eine Rotationsachse (11) rotierbar ist, **dadurch gekennzeichnet, dass**
   - das Antriebselement (4) und/oder das Abtriebselement (7) und/oder das Abschirmungselement (5) und/oder die Statorwicklungen (8) in der Abrolleinrichtung (3) angeordnet sind, wobei
   - in Richtung der Rotationsachse (11) über die Ringform des Abschirmungselements (5) Metallsegmente (6) verteilt und im Abschirmungselement (5) gehalten sind, um die Erhöhung der Rotationsgeschwindigkeit des Abtriebselements (4) um die Drehachse (11) zu bewirken.

2. Transportvorrichtung (23) nach Anspruch 1, **dadurch gekennzeichnet, dass** das Antriebselement (4) die Abrolleinrichtung (3) ist.

3. Transsportvorrichtung (23) nach einem oder mehreren der Ansprüche 1 oder 2, **dadurch gekennzeichnet, dass** die Abrolleinrichtung (3) ein Rad (2) umschließt.

4. Transportvorrichtung (23) nach Anspruch 1, **dadurch gekennzeichnet, dass** die Antriebsmagnete (12) und/oder die Abtriebsmagnete (15) als Permanentmagnete ausgebildet sind.

5. Transportvorrichtung (23) nach Anspruch 1 , **dadurch gekennzeichnet, dass** das Antriebselement (4) ringförmig ausgebildet ist und eine Vielzahl von nebeneinander angeordneten Antriebsmagneten (12) aufweist.

6. Transportvorrichtung (23) nach Anspruch 1, **dadurch gekennzeichnet, dass** die Rotationsgeschwindigkeit des Abtriebselements (7) die Rotationsgeschwindigkeit des Antriebselements (4) übersteigt.

7. Transportvorrichtung (23) nach Anspruch 1, **dadurch gekennzeichnet, dass** das Abschirmungselement (5) wenigstens zwei Metallsegmente (6) umfasst.

8. Transportvorrichtung (23) nach Anspruch 1, **dadurch gekennzeichnet, dass** das Abtriebselement (7) frei um die Rotationsachse (11) drehbar angeordnet ist.

9. Transportvorrichtung (23) nach Anspruch 1, **dadurch gekennzeichnet, dass** die Anzahl der Antriebsmagnete (12) die Anzahl der Abtriebsmagnete (15) übersteigt.

10. Transportvorrichtung (23) nach einem oder mehreren der vorhergehenden Ansprüche, **dadurch gekennzeichnet, dass** das Antriebselement (4) und/oder das Abtriebselement (7) und/oder das Abschirmungselement (5) und/oder die Statorwicklungen (8) berührungslos nebeneinander angeordnet sind.

11. Transportvorrichtung (23) nach einem oder mehreren der vorhergehenden Ansprüche, **dadurch gekennzeichnet, dass** die Abrolleinrichtung (3) mit dem Antriebselement (4) verbindbar ist.

12. Transportvorrichtung (23) nach Anspruch 1 **dadurch gekennzeichnet, dass** der elektrische Strom von den Statorwicklungen (8) zu einer Batterie überführbar ist.

13. Transportvorrichtung (23) nach Anspruch 1, **dadurch gekennzeichnet, dass** der Transport des elektrischen Stroms zur Batterie mittels eines Schleifringkontakts (19) durchführbar ist.

**14.** Verfahren zur Erzeugung eines elektrischen Stroms mittels der Transportvorrichtung (23) nach Anspruch 1, **dadurch gekennzeichnet, dass**

- die Abrolleinrichtung (3) über dem Boden bewegt wird, und
- ein Antriebselement (4) zumindest mittelbar durch die Abrolleinrichtung (3) in Rotation versetzt wird,
- wobei in dem Antriebselement (4) wenigstens zwei Antriebsmagnete (12) angeordnet sind, und
- die Anzahl der Antriebsmagnete (12) von der Anzahl der Abtriebsmagnete (15) abweichen, und
- zur Änderung der Ausrichtung eines zwischen dem Antriebselement (4) und dem Abtriebselement (7) angeordneten Magnetfeldes wenigstens ein nicht magnetisches Abschirmungselement (5) angeordnet wird, und
- wobei das Abtriebselement (7) in eine Rotation versetzt wird, und
- wenigstens eine Statorwicklung (8) angeordnet wird, in der das Abtriebselement (7) zur Erzeugung von elektrischem Strom in Rotation versetzt wird.

**Claims**

**1.** Transport device (23) which can be moved for transporting at least one object and/or a person over a floor by means of at least one rolling device (3), and

- with a drive element (4) which can be set into rotation at least indirectly by the rolling device (3), wherein
- the drive element (4) comprises at least two drive magnets (12) and
- an output element (7) is provided which has at least two output magnets (15),
- wherein the number of drive magnets (12) differs from the number of output magnets (15), and
- at least one non-magnetic shielding element (5) is provided for changing the orientation of a magnetic field arranged between the drive element (4) and the output element (7), and
- wherein the output element (7) can be set into rotation and
- at least one stator winding (8) is provided in which the output element (7) can be rotated about an axis of rotation (11) to generate electric current,
**characterized in that**,
- the drive element (4) and/or the output element (7) and/or the shielding element (5) and/or the stator windings (8) are arranged in the rolling device (3), wherein
- metal segments (6) are distributed around the annular form of the shielding element (5) in the direction of the axis of rotation (11) and are held in the shielding element (5) in order to increase the rotational speed of the output element (4) about the axis of rotation (11).

**2.** Transport device (23) according to claim 1, **characterized in that** the drive element (4) is the rolling device (3).

**3.** Transport device (23) according to one or more of claims 1 or 2, **characterized in that** the rolling device (3) surrounds a wheel (2).

**4.** Transport device (23) according to claim 1, **characterized in that** the drive magnets (12) and/or the output magnets (15) are configured as permanent magnets.

**5.** Transport device (23) according to claim 1, **characterized in that** the drive element (4) is configured to be annular and has a plurality of drive magnets (12) arranged next to one another.

**6.** Transport device (23) according to claim 1, **characterized in that** the rotational speed of the output element (7) exceeds the rotational speed of the drive element (4).

**7.** Transport device (23) according to claim 1, **characterized in that** the shielding element (5) comprises at least two metal segments (6).

**8.** Transport device (23) according to claim 1, **characterized in that** the output element (7) is arranged to rotate freely about the axis of rotation (11).

**9.** Transport device (23) according to claim 1, **characterized in that** the number of drive magnets (12) exceeds the number of output magnets (15).

**10.** Transport device (23) according to one or more of the preceding claims, **characterized in that** the drive element (4) and/or the output element (7) and/or the shielding element (5) and/or the stator windings (8) are arranged next to one another without making contact.

**11.** Transport device (23) according to one or more of the preceding claims, **characterized in that** the rolling device (3) can be connected to the drive element (4).

**12.** Transport device (23) according to claim 1, **characterized in that** the electric current can be transferred from the stator windings (8) to a battery.

**13.** Transport device (23) according to claim 1, **characterized in that** the transport of the electric current to the battery can be carried out by means of a slip ring contact (19).

**14.** Method for generating an electric current by means of the transport device (23) according to claim 1, **characterized in that**

- the rolling device (3) is moved over the floor, and
- a drive element (4) is set into rotation at least indirectly by the rolling device (3),
- wherein at least two drive magnets (12) are arranged in the drive element (4), and
- the number of drive magnets (12) differs from the number of output magnets (15), and
- at least one non-magnetic shielding element (5) is arranged to change the orientation of a magnetic field arranged between the drive element (4) and the output element (7), and
- wherein the output element (7) is set into rotation, and
- at least one stator winding (8) is provided in which the output element (7) is set into rotation to generate electric current.

**Revendications**

**1.** Dispositif de transport (23) qui peut être déplacé pour le transport au moins d'un objet et/ou d'une personne sur un sol au moyen d'au moins un appareil de déroulement (3), et

- avec un élément d'entraînement (4) qui peut être amené en rotation au moins indirectement par l'appareil de déroulement (3),
dans lequel
- l'élément d'entraînement (4) comprend au moins deux aimants d'entraînement (12) et
- un élément de sortie (7) est prévu, lequel présente au moins deux aimants de sortie (15),
- dans lequel le nombre des aimants d'entraînement (12) diverge du nombre d'aimants de sortie (15), et

au moins un élément de blindage (5) non magnétique est prévu pour la modification de l'orientation d'un champ magnétique agencé entre l'élément d'entraînement (4) et l'élément de sortie (7), et
dans lequel l'élément de sortie (7) peut être amené en une rotation et

- au moins un enroulement de stator (8) est agencé, dans lequel l'élément de sortie (7) peut être rotatif pour la génération de courant électrique autour d'un axe de rotation (11),
**caractérisé en ce que**
- l'élément d'entraînement (4) et/ou l'élément de sortie (7) et/ou l'élément de blindage (5) et/ou les enroulements de stator (8) sont agencés dans l'appareil de déroulement (3), dans lequel
- des segments métalliques (6) sont répartis en direction de l'axe de rotation (11) autour de la forme annulaire de l'élément de blindage (5) et sont maintenus dans l'élément de blindage (5) afin de provoquer l'augmentation de la vitesse de rotation de l'élément de sortie (4) autour de l'axe de rotation (11).

**2.** Dispositif de transport (23) selon la revendication 1, **caractérisé en ce que** l'élément d'entraînement (4) est l'appareil de déroulement (3).

**3.** Dispositif de transport (23) selon l'une ou plusieurs quelconques des revendications 1 ou 2, **caractérisé en ce que** l'appareil de déroulement (3) entoure une roue (2).

**4.** Dispositif de transport (23) selon la revendication 1, **caractérisé en ce que** les aimants d'entraînement (12) et/ou les aimants de sortie (15) sont réalisés comme des aimants permanents.

**5.** Dispositif de transport (23) selon la revendication 1, **caractérisé en ce que** l'élément d'entraînement (4) est réalisé de manière annulaire et présente une pluralité d'aimants d'entraînement (12) agencés les uns à côté des autres.

**6.** Dispositif de transport (23) selon la revendication 1, **caractérisé en ce que** la vitesse de rotation de l'élément de sortie (7) dépasse la vitesse de rotation de l'élément d'entraînement (4).

**7.** Dispositif de transport (23) selon la revendication 1, **caractérisé en ce que** l'élément de blindage (5) comprend au moins deux segments métalliques (6).

**8.** Dispositif de transport (23) selon la revendication 1, **caractérisé en ce que** l'élément de sortie (7) est agencé de manière à pouvoir tourner librement autour de l'axe de rotation (11).

**9.** Dispositif de transport (23) selon la revendication 1, **caractérisé en ce que** le nombre d'aimants d'entraînement (12) dépasse le nombre d'aimants de sortie (15).

**10.** Dispositif de transport (23) selon l'une ou plusieurs quelconques des revendications précédentes, **caractérisé en ce que** l'élément d'entraînement (4) et/ou l'élément de sortie (7) et/ou l'élément de blindage (5) et/ou les enroulements de stator (8) sont agencés sans contact les uns à côté des autres.

**11.** Dispositif de transport (23) selon l'une ou plusieurs quelconques des revendications précédentes, **caractérisé en ce que** l'appareil de déroulement (3) peut être relié à l'élément d'entraînement (4).

**12.** Dispositif de transport (23) selon la revendication 1, **caractérisé en ce que** le courant électrique peut être transféré des enroulements de stator (8) à une batterie.

**13.** Dispositif de transport (23) selon la revendication 1, **caractérisé en ce que** le transport du courant électrique à la batterie peut être réalisé au moyen d'un contact à bague glissante (19).

**14.** Procédé de génération d'un courant électrique au moyen du dispositif de transport (23) selon la revendication 1, **caractérisé en ce que**

- l'appareil de déroulement (3) est déplacé sur le sol, et
- un élément d'entraînement (4) est amené en rotation au moins indirectement par l'appareil de déroulement (3),
- dans lequel au moins deux aimants d'entraînement (12) sont agencés dans l'élément d'entraînement (4), et
- le nombre d'aimants d'entraînement (12) diverge du nombre d'aimants de sortie (15), et

au moins un élément de blindage (5) non magnétique est agencé pour la modification de l'orientation d'un champ magnétique agencé entre l'élément d'entraînement (4) et l'élément de sortie (7), et
dans lequel l'élément de sortie (7) est amené en une rotation, et

- au moins un enroulement de stator (8) est agencé, dans lequel l'élément de sortie (7) est amené en rotation pour la génération de courant électrique.

FIG.1

FIG. 2

FIG. 3

# FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202016000172 U1